Europäisches Patentamt

European Patent Office

Office européen des brevets

(11) Publication number: **0 640 678 A2**

# EUROPEAN PATENT APPLICATION

(21) Application number: 94113501.4

(22) Date of filing: 30.08.94

(51) Int. Cl.⁶: **C10G 69/00**, C10G 45/08, B01J 35/10

(30) Priority: **30.08.93 JP 235946/93**
**30.08.93 JP 235947/93**

(43) Date of publication of application:
**01.03.95 Bulletin 95/09**

(84) Designated Contracting States:
**DE FR GB**

(71) Applicant: **NIPPON OIL Co. Ltd.**
**3-12, Nishi-Shimbashi 1-chome**
**Minato-ku**
**Tokyo (JP)**

(72) Inventor: **Kubo, Junichi, c/o Central techn.**
**Res. Lab.**
**Nippon Oil Co., Ltd.,**
**8, Chidoricho,**
**Naka-ku**
**Yokohama-shi,**
**Kanagawa-ken (JP)**

(74) Representative: **Twelmeier, Ulrich, Dipl.Phys.**
**Westliche Karl-Friedrich-Strasse 29-31**
**D-75172 Pforzheim (DE)**

(54) **Process for hydrotreating heavy hydrocarbon oil.**

(57) A process for hydrotreating a heavy hydrocarbon oil, wherein the formation of coke is markedly reduced during operation whereby problems associated with the formation of coke, such as an increase in pressure drop in preheaters, a decrease in catalytic activity, clogging of apparatus and impairment of the quality of products, can be solved; therefore, a long-run operation of the hydrotreating plant in a stable state becomes possible. The present process is constituted of charging a heavy hydrocarbon oil feedstock to a hydrotreating reactor with a thermally treated hydrocarbon oil which is obtained by the thermal treatment of a hydrotreated heavy hydrocarbon oil boiling at above 250°C, and/or with a thermally treated hydrocarbon oil which is obtained by the thermal treatment of a fluid catalytically cracked petroleum boiling at above 250°C, and hydrotreating the charged feedstock in the presence of a hydrotreating catalyst, wherein said thermal treatment is accomplished at 400 to 600°C, the amount of thermally treated hydrocarbon oil is 0.3 to 10% by weight on the basis of the heavy hydrocarbon oil feedstock, aromatic rings of said thermally treated hydrocarbon oil is partially hydrogenated prior to charging if necessary, and the hydrotreating catalyst is preferably a specific catalyst which satisfies a specific pore size distribution.

## Fig.1

## BACKGROUND OF THE INVENTION

1. Field of the Invention

The present invention relates to a process for hydrotreating a heavy hydrocarbon oil, and particularly to a process for hydrotreating a heavy hydrocarbon oil wherein the formation of carbonaceous material can be markedly reduced by incorporating a small amount of specific oil into the heavy hydrocarbon oil feedstock.

2. Background Art

Although hydrotreating has been practiced as a major process for converting heavy hydrocarbon oils into light hydrocarbon oils, a problem associated with the process is the formation of carbonaceous material (coke) which increases pressure drop and decreases catalyst activity, and causes the clogging of apparatus, and deteriorates the quality of products when an asphaltenes-containing heavy hydrocarbon oil such as topped crudes and vacuum residues is converted.

Several reports have appeared, showing that the hydrotreating of a heavy hydrocarbon oil in the presence of a hydrogen-donor substance is effective for controlling the formation of coke. Recycling of part of hydrocracked oil to the reactor has been practiced in this respect; however, in these prior art processes, a great amount of hydrogen-donor substance needs to be added or recycling of hydrocracked oil is required, in addition to the fact that the effect of these additives for controlling the formation of coke is still insufficient.

A principal object of the present invention is to provide an improved process for hydrotreating heavy hydrocarbon oils which will allow the hydrotreating of heavy hydrocarbon oils for longer continuous periods of time in a stable state by reducing the formation of coke, thereby solving the problems associated with the coke formation.

## SUMMARY OF THE INVENTION

The applicant of the invention has intensively researched to solve the foregoing problems, and as a result, has found that the formation of carbonaceous material may be greatly reduced by the incorporation of a small amount of specific oil into the heavy hydrocarbon oil feedstock. The present inventions are based on this finding.

That is, the first aspect of the present invention is directed to a process for hydrotreating a heavy hydrocarbon oil, wherein the process comprises charging a heavy hydrocarbon oil feedstock to a hydrotreating reactor with a thermally treated hydrocarbon oil which is obtained by the thermal treatment of a hydrotreated heavy hydrocarbon oil boiling at above 250°C, and/or with a thermally treated hydrocarbon oil which is obtained by the thermal treatment of a fluid catalytically cracked petroleum oil boiling at above 250°C, and hydrotreating the charged feedstock in the presence of a hydrotreating catalyst, wherein said thermal treatment is accomplished at 400 to 600°C, and the amount of thermally treated hydrocarbon oil is 0.3 to 10% by weight on the basis of the heavy hydrocarbon oil feedstock.

The second aspect of the present invention is directed to a process disclosed in the first aspect of the invention for hydrotreating a heavy hydrocarbon oil, wherein said hydrotreating catalyst comprises particles containing at least one of the metals selected from Group V through Group VIII metal components of the Periodic Table supported on carrier particles selected from the group consisting of alumina, silica-alumina, and cationic exchange Zeolite.

The third aspect of the invention is directed to a process disclosed in the first aspect of the invention for hydrotreating a heavy hydrocarbon oil, wherein the hydrotreating catalyst is a hydrodesulfurizing catalyst comprising particles containing an oxide of the metal selected from the group consisting of nickel, cobalt, and molybdenum supported on porous alumina particles, and/or is a hydrodemetallizing catalyst comprising particles containing vanadium oxide and a metal oxide selected from Group VIa and Group VIII metal components in oxide form supported on porous alumina particles, said hydrodesulfurizing catalyst satisfying the following pore size distribution conditions (c) and (d):

(c) pore size distribution determined by the nitrogen absorption method,

wherein the average pore diameter in pores having a pore diameter of 600 Å (angstrom) or less is in the range of from 100 to 130 Å, the percentage of pore volume in pores having a pore diameter of 90 to 140 Å to pore volume in pores having a pore diameter of 600 Å or less is 70% or more, and the percentage of pore volume in pores having a pore diameter of 60 Å or less to pore volume in pores having a pore diameter of 600 Å or less is 10% or less, and

2

(d) pore size distribution determined by the mercury injection method,

wherein the average pore diameter in pores having a pore diameter of 62 to 600 Å is in the range of from 90 to 130 Å, and the percentage of pore volume in pores having said average pore diameter ± 10 Å to pore volume in pores having a pore diameter of 62 to 600 Å is 60% or more, and the percentage of pore volume in pores having a pore diameter of from said average pore diameter plus greater than 10 Å to 600 Å to pore volume in pores having a pore diameter of 62 to 600 Å is 10% or less, and said hydrodemetallizing catalyst satisfying the following pore size distribution conditions (e) and (f):

(e) pore size distribution determined by the nitrogen absorption method,

wherein the average pore diameter in pores having a pore diameter of 600 Å or less is in the range of from 100 to 180 Å, and the percentage of pore volume in pores having said average diameter ± 20 Å to pore volume in pores having a pore diameter of 600 Å or less is 60% or more, the percentage of pore volume in pores having a pore diameter of 50 Å or less to pore volume in pores having a pore diameter of 600 Å or less is 10% or less, the percentage of pore volume in pores having a pore diameter of 200 to 300 Å to pore volume in pores having a pore diameter of 600 Å or less is 5% or less, the percentage of pore volume in pores having a pore diameter of greater than 300 to 600 Å to pore volume in pores having a diameter of 600 Å or less is 3% or less, and

(f) pore size distribution determined by the mercury injection method,

wherein the average pore diameter in pores having a pore diameter of 62 to 600 Å is in the range of from 100 to 170 Å, the percentage of pore volume in pores having said average pore diameter ± 20 Å to pore volume in pores having a pore diameter of 62 to 600 Å is 70% or more, the percentage of pore volume in pores having a pore diameter of 200 to 600 Å to pore volume in pores having a pore diameter of 62 to 600 Å is in the range of from 5 to 15%, and the percentage of pore volume in pores having a pore diameter of greater than 600 Å to the aggregate pore volume is in the range from 5 to 50%.

The fourth aspect of the invention is directed to a process for hydrotreating a heavy hydrocarbon oil, the process comprising charging a heavy hydrocarbon oil feedstock to a hydrotreating reactor with a thermally treated hydrocarbon oil which is obtained by the thermal treatment of a hydrotreated heavy hydrocarbon oil boiling at above 250°C, and/or with a thermally treated hydrocarbon oil which is obtained by the thermal treatment of a fluid catalytically cracked petroleum oil boiling at above 250°C, and hydrotreating the charged feedstock in the presence of a hydrotreating catalyst, wherein said thermal treatment is accomplished at 400 to 600°C, the amount of thermally treated hydrocarbon oil is 0.3 to 10% by weight on the basis of the heavy hydrocarbon oil feedstock, aromatic rings of said thermally treated hydrocarbon oil is partially hydrogenated prior to charging, and the hydrotreating catalyst is a hydrodesulfurizing catalyst comprising particles containing an oxide of the metal selected from the group consisting of nickel, cobalt, and molybdenum supported on porous alumina particles, and/or is a hydrodemetallizing catalyst comprising particles containing vanadium oxide and a metal oxide selected from Group VIa and Group VIII metal components in oxide form supported on porous alumina particles, said hydrodesulfurizing catalyst satisfying the foregoing pore size conditions (c) and (d), and said hydrodemetallizing catalyst satisfying the foregoing pore size distribution conditions (e) and (f).

The present invention will be described in further detail hereinbelow.

The term "heavy hydrocarbon oil" refers to a petroleum-derived or coal-derived hydrocarbon oil, 50% of which boils at above 350°C. Examples of such heavy hydrocarbon oils include topped crudes, vacuum residues obtained from the topped crudes by vacuum distillation, and various oils derived from coal, oil sands, oil shales and bitumens.

The term "hydrotreating" of a heavy hydrocarbon oil refers to a treatment which is accomplished for purposes such as for converting a heavy hydrocarbon oil to a lighter hydrocarbon oil, for the hydrodesulfurization, hydrodenitrogenation, or hydrodemethallization of a heavy hydrocarbon oil. This term "hydrotreating" essentially further involves a process for hydrocracking a heavy hydrocarbon oil.

The hydrotreating is usually performed at a temperature of 350 to 450°C, preferably 380 to 450°C, more preferably 400 to 430°C, and a pressure of 50 to 200 kg/cm², preferably 70 to 170 kg/cm², more preferably 100 to 150 kg/cm² in the presence of a catalyst under an atmosphere of hydrogen. An LHSV of 0.1 to 1.0 hr⁻¹ may be preferably used.

Conventional cracking, desulfurizing or dematallizing catalysts may be preferably employed for hydrotreating. Examples of such catalysts include particles containing the metal component selected from Group V through Group VIII supported on carrier particles such as alumina, silica-alumina, or cationic exchange Zeolite particles. Oxides or sulfides of these metals may be also used. Examples of these metals include nickel, cobalt, molybdenum, vanadium, and mixtures thereof.

More preferred catalysts are hydrodesulfurizing catalysts comprising particles containing an oxide of the metal selected from the group consisting of nickel, cobalt and molybdenum supported on porous alumina particles, the pore size distribution satisfying the foregoing conditions (c) and (d); and/or hydrodemetallizing catalysts comprising particles containing vanadlum oxide along with an oxide of the metal selected from the group consisting of Group VIa and Group VIII supported on porous alumina particles, the pore size distribution satisfying the foregoing conditions (e) and (f).

Molybdenum or tungsten may be preferably used as the Group VIa metal component, and nickel or cobalt may be preferably used as the Group VIII metal component.

In the present invention, a hydrocarbon oil boiling at above 250°C obtained by hydrotreating a heavy hydrocarbon oil is thermally treated, and/or a hydrocarbon oil boiling at above 250°C obtained by the fluid catalytic cracking of a petroleum oil is thermally treated.

Although fractions boiling at above 250°C are preferably used as the foregoing hydrocarbon oil obtained by the hydrotreating of a heavy hydrocarbon oil, and/or as the foregoing hydrocarbon oil obtained by the fluid catalytic cracking of a petroleum oil, more preferred are those 80% of which boils at above 300°C (e.g. within the range from 300 to 550°C).

The thermal treating is performed at a temperature of 400 to 600°C, preferably 420 to 550°C, usually for 2 to 120 min, preferably 5 to 60 min.

Any apparatuses may be employed for this purpose. A conventional filter unit may by suitably employed to remove solid matter which may precipitate during the thermal treating.

Lighter fractions which are usually produced by thermal treating may be removed by distillation if necessary.

The partially aromatic ring-hydrogenated hydrocarbon oil of the invention refers to a hydrocarbon oil obtained by partially hydrogenating the aromatic rings present in the thermally treated oil.

The partial hydrogenation of aromatic rings is preferably carried out so as to obtain a percentage of aromatic carbon atoms of 5 to 50, more preferably 10 to 40, as calculated by the following formula:

$$\text{Aromatic carbon percentage}(\%) = \frac{\text{number of aromatic ring carbon atoms in a given wt. of oil(g)}}{\text{total number of carbon atoms in a given wt. of oil (g)}} \times 100$$

Although any aromatic ring partial hydrogenation processes may be employed, the thermally treated oil may be preferably hydrogenated in the presence of a hydrogenating catalyst in an atmosphere of hydrogen at an elevated pressure.

Any hydrogenating catalysts such as those used for conventional hydrotreating petroleum distillates may be employed for the partial hydrogenation. In particular, a catalyst comprising particles containing one or more of the metals selected from Group V through Group VIII of the Periodic Table supported on inorganic particles may be preferably used. Sulfides and oxides of these metals may be also employed.

Examples of these metals include nickel, cobalt, molybdenum, vanadium, tungsten, and the like.

Examples of the inorganic carrier include porous particles of alumina, silica-alumina, cationic exchange Zeolite, and diatomaceous earth, and the like.

Conventional aromatic ring-hydrogenating catalysts may be used. Among these are catalysts comprising particles containing one or more of the metal components such as nickel, nickel oxide, nickel-copper, platinum, platinum oxide, platinum-rhodium, platinum-lithium, rhodium, palladium, cobalt, Raney cobalt, and ruthenium supported on inorganic carrier particles such as active carbon, alumina, silica-alumina, kieselguhr, Zeolite.

When conventional catalysts for hydrotreating petroleum distillates are used, the partial aromatic ring-hydrogenation is performed at a temperature of 300 to 400°C, a pressure of 30 to 150 kg/cm². When conventional catalysts for aromatic ring-hydrogenation are used, the partial aromatic ring-hydrogenation is performed at a temperature of 150 to 300°C, a pressure of 30 to 150 kg/cm².

4

Any type of hydrotreating apparatus such as fixed-bed, moving-bed, fluidized-bed, or vessel-types may be employed. The amount of thermally treated oil and/or partially aromatic ring-hydrogenated hydrocarbon oil is 0.3 to 10% by weight, preferably 0.5 to 8% by weight, on the basis of the heavy hydrocarbon oil feedstock.

Although any feeding technique may be used, the thermally treated and/or partially aromatic ring-hydrogenated hydrocarbon oil may be charged into the reactor separately from the heavy hydrocarbon oil feedstock, or may be charged simultaneously with the feedstock after blending the hydrocarbon oil with the feedstock. The blending may be carried out preferably before they enter into a preheater.

In the present invention, when a hydrocarbon oil boiling at above 250°C obtained by hydrotreating a heavy hydrocarbon oil is used, a hydrocarbon distillate boiling at above 250°C obtained by distilling the hydrotreated effluent from the hydrotreating tower can be directly recycled for use.

Examples of the petroleum oil which can be used for fluid catalytic cracking (FCC) include conventional hydrocarbon feedstocks for FCC, such as kerosene, diesel oils, vacuum diesel oils, and hydrotreated topped crudes.

Any condition for FCC may be employed. Examples of such conditions include those of a temperature of 450 to 550°C, a pressure of 0.7 to 2.0 kg/cm$^2$ and in the presence of a catalyst comprising particles such as silica-alumina or Zeolite.

The partially aromatic ring-hydrogenated hydrocarbon oil of the invention has good hydrogen-donating ability even when added in a small amount thereby greatly reducing the amount of coke formed.

On the other hand, in a hydrotreating tower the thermally treated oil of the present invention is converted into an aromatic ring-hydrogenated substance which also exhibits good hydrogen-donating ability thereby significantly reducing the amount of carbonaceous material formed.

**BRIEF DESCRIPTION OF THE DRAWINGS**

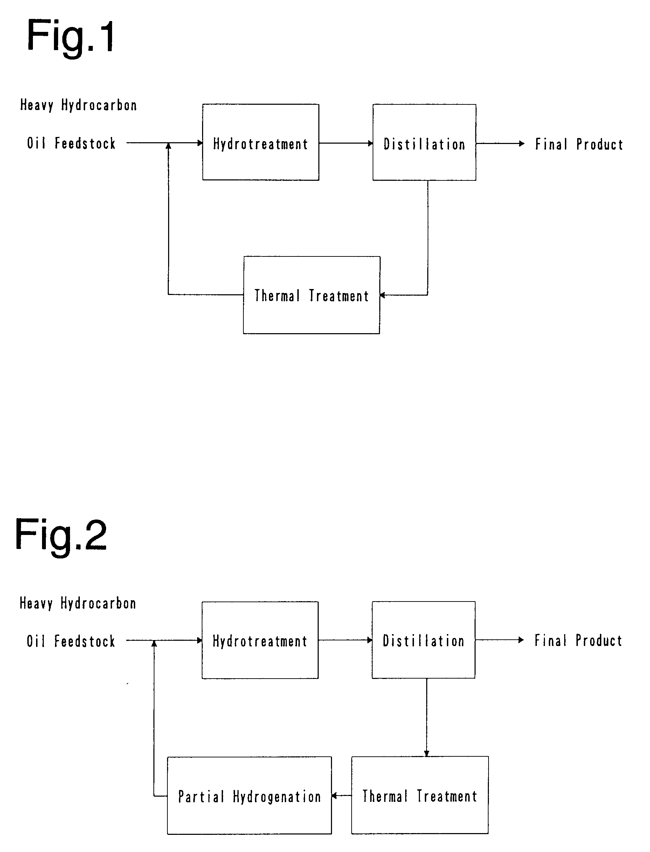

FIG. 1 is a process flow diagram of the present invention showing hydrotreatment of a heavy hydrocarbon oil feedstock in a tower, followed by distillation to produce a final product; and thermal treatment of the hydrotreated effluent from the distilling tower, followed by recycling the thermally treated hydrocarbon oil to blend it with the heavy hydrocarbon oil feedstock.

FIG.2 is another process flow diagram of the present invention showing hydrotreatment of a heavy hydrocarbon oil feedstock in a tower, followed by distillation to produce a final product; and thermal treatment of the hydrotreated affluent from the distilling tower, followed by partial aromatic ring-hydrogenation and recycling the resulting oil to blend it with the heavy hydrocarbon oil feedstock.

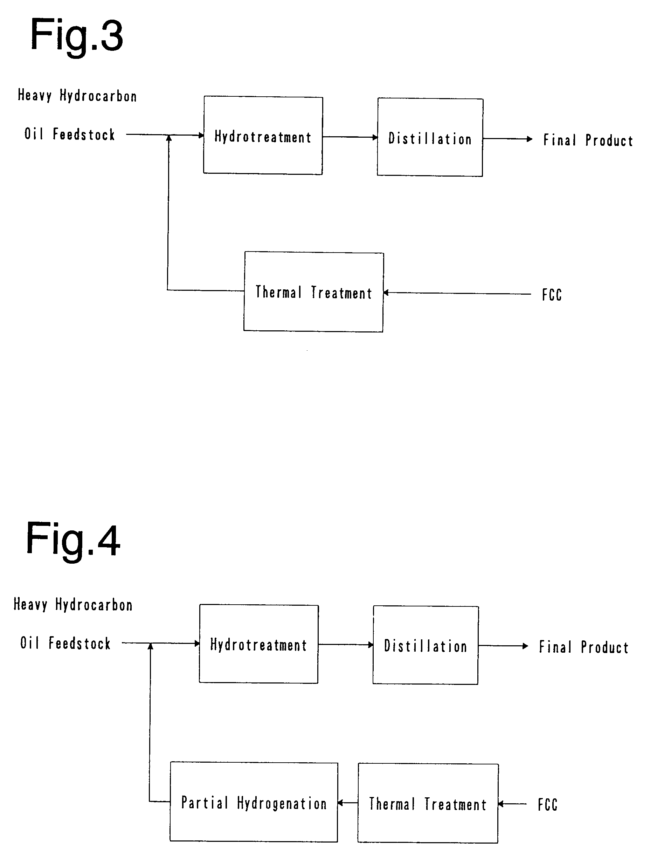

FIG. 3 is further another process flow diagram of the present invention showing thermal treatment of a fluid catalytically cracked hydrocarbon oil, followed by recycling the resulting oil to blend it with a heavy hydrocarbon oil feedstock; and hydrotreatment of the blended heavy hydrocarbon feedstock, followed by distillation of the hydrotreated oil to produce a final product.

FIG. 4 is still further another process flow diagram of the present invention showing thermal treatment of a fluid catalytically cracked hydrocarbon oil, followed by partial aromatic ring-hydrogenation and recycling the resulting oil to blend it with a heavy hydrocarbon oil feedstock; and hydrotreatment of the blended feed, followed by distillation of the resulting oil to produce a final product.

**DETAILED DESCRIPTION OF THE PREFERRED EMBODIMENTS**

The invention will be further illustrated but in no way limited by the following examples.

EXAMPLE 1

A Middle East topped crude having properties as set forth in Table 1 was treated in a downward fixed-bed reactor (internal diameter 10 mm, height 0.5 m, catalyst volume 30 cm$^3$) in the presence of a commercially available Ni-Mo/silica-alumina catalyst at a temperature of 413°C, a hydrogen pressure of 165 atm, and a LHSV of 0.50 hr$^{-1}$. In this experiment, the substance obtained by the following procedure was added to the feedstock in an amount of 3% by weight on the basis of the heavy hydrocarbon oil feedstock. That is, a heavier distillate boiling at above 300°C obtained by distilling a hydrocracked hydrocarbon oil from the foregoing hydrotreating reactor was held at 475°C for 20 min in an autoclave. The low-boiling fractions boiling at below 300°C were removed by distillation.

The hydrotreatment was continued for about 260 hr. The properties, amount of dried sludge and toluene insolubles of the resulting oil after 240 hr are set forth in Table 2.

EXAMPLE 2

The procedure in Example 1 was followed with the exception that the desulfurizing catalyst (A) of the properties as set forth in Table 6 was employed, and the substance obtained by the following procedure was added to the feedstock as an additive in an amount of 3% by weight based on the feedstock.

That is, the substance used as the additive in Example 1 was hydrogenated at a temperature of 380°C, a hydrogen pressure of 120 atm for 40 min in the presence of a commercially available Co-Mo/alumina type hydrodesulfurizing catalyst in an autoclave. The resulting hydrogenated oil was added as an additive without further removing low-boiling fractions. The percentage of aromatic carbon atoms of the additive determined by $^1$H-NMR and $^{13}$C-NMR was 31.

The properties, amount of dried sludge and toluene insolubles of the hydrotreated oil are set forth in Table 2.

EXAMPLE 3

The procedure in Example 1 was followed with the exception that the substance obtained by the following procedure was added to the feedstock in an amount of 1.5% by weight based on the feedstock.

That is, a heavier fraction boiling at above 300°C obtained by the fluid catalytic cracking of a petroleum oil was held at a temperature of 460°C for 60 min. The resulting oil was distilled to remove the low-boiling fractions boiling at below 300°C.

The properties, amount of dried sludge and toluene insolubles of the resulting hydrotreated oil are set forth in Table 2.

EXAMPLE 4

The procedure in Example 1 was followed with the exception that the desulfurizing catalyst (A) of the properties as set forth in Table 6 was employed, and the substance obtained by the following procedure was added to the feedstock in an amount of 1.5% by weight based on the feedstock.

That is, the substance used as the additive in Example 3 was hydrogenated at a temperature of 370°C, a hydrogen partial pressure of 130 atm in the presence of a commercially available Co-Mo/alumina type hydrodesulfurizing catalyst for 60 min in an autoclave. The resulting hydrogenated oil was added as an additive after the removal of low-boiling fractions (below 300°C) by distillation. The percentage of aromatic carbon atoms of the additive determined by $^1$H-NMR and $^{13}$C-NMR was 23.

The properties, amount of dried sludge and toluene insolubles of the hydrotreated oil are set forth in Table 2.

COMPARATIVE EXAMPLE 1

The procedure in Examples 1 through 4 was followed, but without addition of the additive.

The properties, amount of dried sludge and toluene insolubles of the resulting hydrotreated oil are set forth in Table 2.

Table 1

| Heavy Hydrocarbon Oil Feedstock | Topped Crude (Arabian Heavy) |
|---|---|
| Density (15°C) | 0.995 |
| Viscosity (cSt, 50°C),(wt.%) | 4.120 |
| Carbon Residue (wt.%) | 15.0 |
| n-Heptane Insolubles (wt.%) | 9.5 |
| IBP (°C)<br>5/10%<br>20/30<br>40/50 | 276<br>380/413<br>453/488<br>534/553 |
| S (wt.%)<br>N (wtppm)<br>V (wtppm)<br>Ni (wtppm) | 4.40<br>2400<br>93<br>35 |

Table 2

| Properties of Hydrotreated Hydrocarbon oil | | | | | |
|---|---|---|---|---|---|
| | Examples | | | | Compr. Example |
| | 1 | 2 | 3 | 4 | 1 |
| Density (15°C) | 0.980 | 0.982 | 0.979 | 0.983 | 0.979 |
| Cracking (%, based on 350°C) | 90.0 | 98.5 | 90.3 | 98.3 | 91.3 |
| Desulfurization (%) | 95.0 | 94.8 | 94.7 | 95.3 | 94.1 |
| Demetallization (V, Ni, %) | 95.9 | 95.1 | 95.7 | 95.0 | 96.5 |
| Dried Sludge (wt.%) | 0.08 | 0.04 | 0.07 | 0.04 | 0.71 |
| Toluene Insolubles (wt.%) | 0.05 | 0.03 | 0.04 | 0.02 | 0.14 |

EXAMPLE 5

A Middle East vacuum residue having the properties as set forth in Table 3 was treated by use of the same apparatus and catalyst volume used in Example 1 in the presence of a commercially available Ni-Co-Mo/silica-alumina type hyrotreating catalysts at a temperature of 415°C, a hydrogen pressure of 170 atom, a LHSV of $0.30^{-1}$. In this experiment, the additive used in Example 4 was added to the feedstock in an amount of 2.5% by weight, on the basis of the heavy hydrocarbon oil feedstock.

The properties, amount of dried sludge and toluene insolubles of the resulting hydrotreated oil are set forth in Table 4.

COMPARATIVE EXAMPLE 2

The procedure in Example 5 was followed, but without addition of the additive.

The properties, amount of dried sludge and toluene insolubles of the resulting hydrotreated oil are set forth in Table 4.

Table 3

| Heavy Hydrocarbon Oil Feedstock | Vacuum Residue (Arabian Heavy) |
|---|---|
| Density (15°C) | 1.030 |
| Viscosity (cSt, 120°C) | 924.2 |
| Carbon Residue (wt.%) | 22.31 |
| n-Heptane Insoluble (wt.%) | 16.2 |
| S (wt.%)<br>N (wtppm)<br>V (wtppm)<br>Ni (wtppm) | 5<br>4030<br>140<br>47 |

Table 4

| Properties of Hydrotreated Hydrocarbon oil | | |
|---|---|---|
| | Example | Compr. Example |
| | 5 | 2 |
| Density (15°C) | 0.990 | 0.987 |
| Cracking (%, based on 565°C) | 90 | 82 |
| Desulfurization (%) | 84 | 86 |
| Demetallization (V, Ni, %) | 84 | 90 |
| Dried Sludge (wt.%) | 0.11 | 1.58 |
| Toluene Insolubles (wt.%) | 0.07 | 0.41 |

As is clear from the results in Comparative Example 1 (Table 2), when an Arabian heavy topped crude is severely cracked, a considerable amount of carbonaceous material forms. By contrast, when the additive is added to the feedstock in an amount of 1.5% by weight, the amount of dried sludge and toluene insolubles decreases significantly. Although the effect of additives already partially hydrogenated (Example 2 and 4) is more marked, non-hydrogenated additives (Example 1 and 3) also exert a good preventing effect on the coke formation.

As is evident from the results set forth in Table 4, the additive of the present invention also exerts a marked preventing effect on the coke formation even when an Arabian heavy vacuum residue is hydrotreated.

EXAMPLE 6

An Arabian heavy topped crude of the properties as set forth in Table 5 was hydrotreated downwardly in a fixed-bed reactor (inner diameter 10 mm, height 0.5 m, catalyst volume 30 cm$^2$) in the presence of a desulfurizing catalyst (A) (Table 6) at a temperature of 385°C, a hydrogen pressure of 152 atm, and a LHSV of 0.5 hr$^{-1}$.

In this experiment, the substance obtained by the following procedure was added to the feedstock in an amount of 3% by weight on the basis of the heavy hydrocarbon oil feedstock.

That is, a decant oil (DCO) from FCC unit was held at 460°C for 20 min. After the removal of solid matter by filtration and low-boiling fractions (below 250°C) by distillation, the resulting oil was collected as a thermally treated hydrocarbon oil.

The hydrotreating was continued for about 210 hr. The properties, amount of dried sludge and toluene insolubles of the resulting hydrotreated oil obtained after 200 hr are set forth in Table 8.

EXAMPLE 7

The procedure in Example 6 was followed with the exception that the substance obtained by the following procedure was added to the feedstock as an additive in an amount of 3% by weight, on the basis of the feedstock.

That is, the thermally treated hydrocarbon oil obtained in Example 6 was hydrogenated at a temperature of 382°C, a hydrogen pressure of 147 atm, a LHSV of 0.57 hr$^{-1}$ in the presence of a commercially available Co-Mo/alumina type hydrodesulfurizing catalyst.

The percentage of aromatic carbon atoms of the hydrogenated additive determined by $^1$H-NMR and $^{13}$C-NMR was 56.

The properties, amount of dried sludge and toluene insolubles of the hydrotreated oil obtained by hydrotreating the feedstock containing the above additive are set forth in Table 8.

EXAMPLE 8

The procedure in Example 6 was followed with the exception that the substance obtained by the following procedure was added to the feedstock as an additive in an amount of 3% by weight on the basis of the feedstock.

That is, the hydrotreated oil obtained in this Example 8 (i.e. the product oil) was thermally treated at a temperature of 430°C for 100 min, followed by removing low-boiling fractions (below 300°C) whereby a thermally treated oil was obtained.

The properties, amount of dried sludge and toluene insolubles of the hydrotreated oil obtained by hydrotreating the feedstock containing the above thermally treated oil are set forth in Table 8.

COMPARATIVE EXAMPLE 3

The procedure in Example 6 was followed, but without addition of the additive.

The properties, amount of dried sludge and toluene insolubles of the resulting hydrotreated oil are set forth in Table 8.

EXAMPLE 9

A demetallizing catalyst (A) of the properties as set forth in Table 7 was charged in an amount of 35% by volume to the inlet side, and a desulfurizing catalyst (A) in an amount of 65% by volume was charged to the exit side of the reactor. An Arabian heavy vacuum residue of the properties as set forth in Table 5 was hydrotreated. The hydrotreating was accomplished by using the same apparatus in Example 6 at a temperature of 403°C, a hydrogen pressure of 175 atm, a LHSV of 0.3 hr$^{-1}$. The combined amount of catalysts was 30 cm$^3$.

In this experiment, the thermally treated hydrocarbon oil obtained by the following procedure was added to the feedstock in an amount of 2.5% by weight on the basis of the feedstock.

That is, a crude oil was held at 480°C for 30 min. After the removal of solid matter by filtration and low-boiling fractions (below 250°C) by distillation, the resulting oil was collected as a thermally treated hydrocarbon oil.

The hydrotreating was continued for about 240 hr, and the properties, amount of dried sludge and toluene insolubles of the hydrotreated oil obtained after 228 hr are set forth in Table 8.

EXAMPLE 10

The procedure in Example 9 was followed with the exception that the substance obtained by the following procedure was added to the feedstock as an additive in an amount of 3.3% by weight based on the heavy hydrocarbon feedstock.

That is, the thermally treated oil obtained in Example 9 was hydrogenated at a temperature of 250°C, a hydrogen pressure of 135 atm, a LHSV of 0.4 hr$^{-1}$ in the presence of a commercially available aromatic ring-hydrogenating rhodium/kieselguhr catalyst. The percentage of aromatic carbon atoms of the resulting hydrogenated hydrocarbon oil determined by $^1$H-NMR and $^{13}$C-NMR was 62.

The properties, amount of dried sludge and toluene insolubles of the hydrotreated oil obtained by the hydrotreatment of the vacuum residue feedstock containing the foregoing substance as an additive are set forth in Table 8.

EXAMPLE 11

The procedure in Example 6 was followed with the exception that the substance obtained by the following procedure was added to the feedstock as an additive in an amount of 3.3% by weight based on the heavy hydrocarbon feedstock.

That is, the hydrotreated oil obtained in this Example 11 (i.e. the product oil) was thermally treated at a temperature of 456°C for 30 min. After the removal of solid matter by filtration and low-boiling fractions (below 300°C) by distillation, the resulting oil was collected as a thermally treated oil.

The properties, amount of dried sludge and toluene insolubles of the hydrotreated oil obtained by the hydrotreatment of the feedstock containing the thermally treated oil are set forth in Table 8.

COMPARATIVE EXAMPLE 4

The procedure in Example 9 was followed, but without addition of the additive.

The properties, amount of dried sludge and toluene insolubles of the hydrotreated oil are set forth in Table 8.

EXAMPLE 12

A demetallizing catalyst (B) of the properties as set forth in Table 7 was charged in an amount of 50% by volume to the inlet side, and a desulfurizing catalyst (B) of the properties as set forth in Table 6 was charged in an amount of 50% by volume to the exit side of the reactor without mixing both catalysts together. An Arabian heavy vacuum residue used in Example 9 was hydrotreated. The hydrotreating was accomplished by using the same apparatus employed in Examples 6 and 9 at a temperature of 410°C. A hydrogen pressure of 180 atm, a LHSV of 0.25 $hr^{-1}$. The combined amount of catalysts was 30 $cm^3$.

In this experiment, the thermally treated hydrocarbon oil obtained by the following procedure was added as an additive to the heavy hydrocarbon oil feedstock in an amount of 1.0% by weight on the basis of the feedstock.

That is, a decant oil (DCO) from FCC unit was held at 450°C for 40 min. After the removal of solid matter by filtration and low-boiling fractions (below 250°C) by distillation, the resulting oil was collected as a thermally treated hydrocarbon oil.

The hydrotreating experiment was continued for about 240 hr, and the properties, amount of dried sludge and toluene insolubles of the hydrotreated oil obtained after 228 hr are set forth in Table 8.

COMPARATIVE EXAMPLE 5

The procedure in Example 12 was followed, but without addition of the additive.

The properties, amount of dried sludge and toluene insolubles of the hydrotreated oil are set forth in Table 8.

Table 5

| Heavy Hydrocarbon Oil Feedstock | Topped Crude (Arabian Heavy) | Vacuum Residue (Arabian Heavy) |
|---|---|---|
| Density (15°C) | 0.995 | 1.030 |
| Viscosity (cSt) | 4.120(50°C) | 925(120°C) |
| Carbon Residue (wt.%) | 15.0 | 22.4 |
| n-Heptane Insolubles (wt.%) | 9.5 | 16.2 |
| IBP (°C)<br>5/10%<br>20/30<br>40/50 | 276<br>380/413<br>453/488<br>534/553 | 538<br>550/570<br>-<br>- |
| Elementary Analysis (wt.%) | | |
| C<br>H<br>N<br>S | 84.3<br>10.6<br>0.3<br>4.29 | 85.1<br>9.9<br>0.4<br>5.06 |
| Metal (wtppm) | | |
| V<br>Ni | 93<br>35 | 141<br>48 |

EP 0 640 678 A2

Table 6
Properties of Desulfurizing Catalyst

| Catalyst | A | B |
|---|---|---|
| Pore size distribution determined by the nitrogen absorption method:<br>Average pore diameter in pores having a pore diameter of 0~600 Å<br>Pore volume in pores having a pore diameter of 90~140 Å to<br>  pore volume in pores having a pore diameter of 0~600 Å<br>Pore volume in pores having a pore diameter of 0~60 Å to<br>  pore volume in pores having a pore diameter of 0~600 Å<br><br>Pore size distribution determined by the mercury injection method:<br>Average pore diameter in pores having a pore diameter of 62~600 Å<br>Pore volume in pores having a pore diameter of the average pore<br>  diameter ± 10 Å to pore volume in pores having a pore diameter<br>  of 62~600 Å<br>Pore volume in pores having a pore diameter of<br>  from the average pore diameter + greater than 10 Å to 600 Å<br>  to pore volume in pores having a pore diameter of 62~600 Å | 105 Å<br><br>78%<br><br>9%<br><br><br>96 Å<br><br><br>64%<br><br><br>7.1% | 128 Å<br><br>90%<br><br>6%<br><br><br>121 Å<br><br><br>71%<br><br><br>5.2% |
| Carrier | Porous Alumina | Porous Alumina |
| Active metal components for hydrogenation | Co- and Mo-oxide | Ni-, Co- and Mo-oxide |

Table 7
Properties of Demetallizing Catalyst

| Catalyst | A | B |
|---|---|---|
| Pore size distribution determined by the nitrogen absorption method: | | |
|    Average pore diameter in pores having a pore diameter of 0~600 Å | 130 Å | 171 Å |
|    Pore volume in pores having a pore diameter of the average diameter ± 20 Å to pore volume in pores having a diameter of 0~600 Å | 68% | 76% |
|    Pore volume in pores having a pore diameter of a pore diameter of 0~50 Å to pore volume in pores having a diameter of 0~600 Å | 7.9% | 7.2% |
|    Pore volume in pores having a pore diameter of 200~300 Å to pore volume in pores having a pore diameter of 0~600 Å | 4.3% | 3.9% |
|    Pore volume in pores having a pore diameter of 300~600 Å to pore volume in pores having a pore diameter of 0~600 Å | 2.6% | 2.1% |
| Pore size distribution determined by the mercury injection method: | | |
|    Average pore diameter in pores having a pore diameter of 62~600 Å | 136 Å | 159 Å |
|    Pore volume in pores having a pore diameter of the average pore diameter ± 20 Å to pore volume in pores having a pore diameter of 62~600 Å | 76% | 81% |
|    Pore volume in pores having a pore diameter of 200~600 Å to pore volume in pores having a pore diameter of 62~600 Å | 7.9% | 11.2% |
|    Pore volume in pores having a pore diameter of greater than 600 Å to the aggregate pore volume | 18.7% | 31.1% |
| Carrier | Porous Alumina | Porous Alumina |
| Active metal components for hydrogenation | V-, Mo- and Co-oxide | V-, Ni- and Co-oxide |

Table 8

EP 0 640 678 A2

Table 8
Properties of Hydrotreated Hydrocarbon Oil

| | Examples | | | | | | | Compr. Examples | | |
|---|---|---|---|---|---|---|---|---|---|---|
| | 6 | 7 | 8 | 9 | 10 | 11 | 12 | 3 | 4 | 5 |
| Density (15°C) | 0.9320 | 0.9323 | 0.9316 | 0.9850 | 0.9880 | 0.9850 | 0.9700 | 0.9311 | 0.9830 | 0.9720 |
| Cracking (%) | 14.0 | 13.6 | 14.2 | 31.2 | 30.8 | 32.1 | 42.4 | 14.8 | 32.5 | 43.6 |
| Desulfurization (%) | 94.6 | 93.2 | 94.7 | 89.5 | 88.3 | 89.7 | 93.6 | 95.1 | 90.1 | 94.1 |
| Demetallization (V, Ni %) | 88.6 | 87.8 | 89.9 | 85.0 | 83.1 | 84.7 | 89.0 | 90.2 | 85.1 | 90.5 |
| Dried Sludge (wt.%) | 0.06 | 0.05 | 0.11 | 0.10 | 0.08 | 0.36 | 0.16 | 0.80 | 1.21 | 1.96 |
| Toluene Insolubles (wt.%) | 0.05 | 0.03 | 0.06 | 0.06 | 0.05 | 0.20 | 0.09 | 0.17 | 0.78 | 1.11 |

As is evident from the results in Examples 6 through 12, and Comparative Examples 3 through 5, according to the present invention, the formation of carbonaceous material, i.e. dried sludge and toluene insolubles can be significantly reduced, and a marked preventing effect on the formation of the carbonaceous material can be exerted even when a smaller amount is added in comparison with the conventional hydrogen-donating substance. This also indicates the excellent hydrogen-donating ability of the specific hydrogen-donating substance of the present invention, as well as the high activity of the catalyst of the

14

EP 0 640 678 A2

present invention in cooperation with the foregoing additive of the invention.

As previously described, non-hydrogenated additives of the present invention also exert a good preventing effect on the formation of coke, which indicates the suitability of the catalyst used in the present invention; that is, in the hydrotreating tower the non-hydrogenated additive is converted to a substance wherein the aromatic rings thereof have been partially hydrogenated in the presence of the catalyst of the invention. As a result, the resulting substance also have good hydrogen-donating ability.

**Claims**

1. A process for hydrotreating a heavy hydrocarbon oil, wherein said process comprises charging a heavy hydrocarbon oil feedstock to a hydrotreating reactor with a thermally treated hydrocarbon oil which is obtained by the thermal treatment of a hydrotreated heavy hydrocarbon oil boiling at above 250°C, and/or with a thermally treated hydrocarbon oil which is obtained by the thermal treatment of a fluid catalytically cracked petroleum oil boiling at above 250°C, and hydrotreating the charged feedstock in the presence of a hydrotreating catalyst, wherein said thermal treatment is accomplished at 400 to 600°C, and the amount of thermally treated hydrocarbon oil is 0.3 to 10% by weight on the basis of the heavy hydrocarbon oil feedstock.

2. A process according to claim 1 wherein said hydrotreating catalyst comprises particles containing at least one of the metals selected from Group V through Group VIII metal components of the Periodic Table supported on carrier particles selected from the group consisting of alumina, silica-alumina, and cationic exchange Zeolite.

3. A process according to claim 1 wherein said hydrotreating catalyst is a hydrodesulfurizing catalyst comprising particles containing an oxide of the metal selected from the group consisting of nickel, cobalt, and molybdenum supported on porous alumina particles, and/or is a hydrodemetallizing catalyst comprising particles containing vanadium oxide and a metal oxide selected from Group VIa and Group VIII metal components in oxide form supported on porous alumina particles, said hydrodesulfurizing catalyst satisfying the following pore size distribution conditions (c) and (d):
   (c) pore size distribution determined by the nitrogen absorption method,
       wherein the average pore diameter in pores having a pore diameter of 600 Å(angstrom) or less is in the range of from 100 to 130 Å, the percentage of pore volume in pores having a pore diameter of 90 to 140 Å to pore volume in pores having a pore diameter of 600 Å or less is 70% or more, and the percentage of pore volume in pores having a pore diameter of 60 Å or less to pore volume in pores having a pore diameter of 600 Å or less is 10% or less, and
   (d) pore size distribution determined by the mercury injection method,
       wherein the average pore diameter in pores having a pore diameter of 62 to 600 Å is in the range of from 90 to 130 Å, and the percentage of pore volume in pores having said average pore diameter ± 10 Å to pore volume in pores having a pore diameter of 62 to 600 Å is 60% or more, and the percentage of pore volume in pores having a pore diameter of from said average pore diameter plus greater than 10 Å to 600 Å to pore volume in pores having a pore diameter of 62 to 600 Å is 10% or less, and said hydrodemetallizing catalyst satisfying the following pore size distribution conditions (e) and (f):
   (e) pore size distribution determined by the nitrogen absorption method,
       wherein the average pore diameter in pores having a pore diameter of 600 Å or less is in the range of from 100 to 180 Å, and the percentage of pore volume in pores having said average diameter ± 20 Å to pore volume in pores having a pore diameter of 600 Å or less is 60% or more, the percentage of pore volume in pores having a pore diameter of 50 Å or less to pore volume in pores having a pore diameter of 600 Å or less is 10% or less, the percentage of pore volume in pores having a pore diameter of 200 to 300 Å to pore volume in pores having a pore diameter of 600 Å or less is 5% or less, the percentage of pore volume in pores having a pore diameter of greater than 300 to 600 Å to pore volume in pores having a diameter of 600 Å or less is 3% or less, and
   (f) pore size distribution determined by the mercury injection method,
       wherein the average pore diameter in pores having a pore diameter of 62 to 600 Å is in the range of from 100 to 170 Å, the percentage of pore volume in pores having said average pore diameter ± 20 Å to pore volume in pores having a pore diameter of 62 to 600 Å is 70% or more, the percentage of pore volume in pores having a pore diameter of 200 to 600 Å to pore volume in pores

15

having a pore diameter of 62 to 600 Å is in the range of from 5 to 15%, and the percentage of pore volume in pores having a pore diameter of greater than 600 Å to the aggregate pore volume is in the range from 5 to 50%.

4. A process for hydrotreating a heavy hydrocarbon oil, said process comprising charging a heavy hydrocarbon oil feedstock to a hydrotreating reactor with a thermally treated hydrocarbon oil which is obtained by the thermal treatment of a hydrotreated heavy hydrocarbon oil boiling at above 250°C, and/or with a thermally treated hydrocarbon oil which is obtained by the thermal treatment of a fluid catalytically cracked petroleum oil boiling at above 250°C, and hydrotreating the charged feedstock in the presence of a hydrotreating catalyst, wherein said thermal treatment is accomplished at 400 to 600°C, the amount of thermally treated hydrocarbon oil is 0.3 to 10% by weight on the basis of the heavy hydrocarbon oil feedstock, aromatic rings of said thermally treated hydrocarbon oil is partially hydrogenated prior to charging, and said hydrotreating catalyst is a hydrodesulfurizing catalyst comprising particles containing an oxide of the metal selected from the group consisting of nickel, cobalt, and molybdenum supported on porous alumina particles, and/or is a hydrodemetallizing catalyst comprising particles containing vanadium oxide and a metal oxide selected from Group VIa and Group VIII metal components in oxide form supported on porous alumina particles, said hydrodesulfurizing catalyst satisfying the following pore size conditions (c) and (d):

(c) pore size distribution determined by the nitrogen absorption method,

wherein the average pore diameter in pores having a pore diameter of 600 Å or less is in the range of from 100 to 130 Å, the percentage of pore volume in pores having a pore diameter of 90 to 140 Å to pore volume in pores having a pore diameter of 600 Å or less is 70% or more, and the percentage of pore volume in pores having a pore diameter of 60 Å or less to pore volume in pores having a pore diameter of 600 Å or less is 10% or less, and

(d) pore size distribution determined by the mercury injection method,

wherein the average pore diameter in pores having a pore diameter of 62 to 600 Å is in the range of from 90 to 130 Å, and the percentage of pore volume in pores having said average pore diameter ± 10 Å to pore volume in pores having a pore diameter of 62 to 600 Å is 60% or more, and the percentage of pore volume in pores having a pore diameter of from said average pore diameter plus greater than 10 Å to 600 Å to pore volume in pores having a pore diameter of 62 to 600 Å is 10% or less, and said hydrodemetallizing catalyst satisfying the following pore size distribution conditions (e) and (f):

(e) pore size distribution determined by the nitrogen absorption method,

wherein the average pore diameter in pores having a pore diameter of 600 Å or less is in the range of from 100 to 180 Å, and the percentage of pore volume in pores having said average diameter ± 20 Å to pore volume in pores having a pore diameter of 600 Å or less is 60% or more, the percentage of pore volume in pores having a pore diameter of 50 Å or less to pore volume in pores having a pore diameter of 600 Å or less is 10% or less, the percentage of pore volume in pores having a pore diameter of 200 to 300 Å to pore volume in pores having a pore diameter of 600 Å or less is 5% or less, the percentage of pore volume in pores having a pore diameter of greater than 300 to 600 Å to pore volume in pores having a diameter of 600 Å or less is 3% or less, and

(f) pore size distribution determined by the mercury injection method,

wherein the average pore diameter in pores having a pore diameter of 62 to 600 Å is in the range of from 100 to 170 Å, the percentage of pore volume in pores having said average pore diameter ± 20 Å to pore volume in pores having a pore diameter of 62 to 600 Å is 70% or more, the percentage of pore volume in pores having a pore diameter of 200 to 600 Å to pore volume in pores having a pore diameter of 62 to 600 Å is in the range of from 5 to 15%, and the percentage of pore volume in pores having a pore diameter of greater than 600 Å to the aggregate pore volume is in the range from 5 to 50%.

16

# Fig.1

# Fig.2

# Fig.3

Heavy Hydrocarbon

Oil Feedstock ⟶ Hydrotreatment ⟶ Distillation ⟶ Final Product

Thermal Treatment ⟵ FCC

# Fig.4

Heavy Hydrocarbon

Oil Feedstock ⟶ Hydrotreatment ⟶ Distillation ⟶ Final Product

Partial Hydrogenation ⟵ Thermal Treatment ⟵ FCC